# EUROPEAN PATENT SPECIFICATION

(11) **EP 3 331 120 B1**
(45) Date of publication and mention of the grant of the patent: **17.10.2018**
(21) Application number: 16202196.8
(22) Date of filing: 05.12.2016
(51) Int. Cl.: H01M 10/48, H02J 7/00, H01M 10/42

(54) **CONTROL UNIT FOR A BATTERY SYSTEM**
STEUERUNGSEINHEIT FÜR EIN BATTERIESYSTEM
UNITÉ DE COMMANDE POUR SYSTÈME DE BATTERIE

(43) Date of publication of application: 06.06.2018
(73) Proprietor: Samsung SDI Co., Ltd., Giheung-gu Yongin-si, Gyeonggi-do 17084 (KR)
(72) Inventor: Hofer, Maximilian, 8230 Hartberg (AT)
(74) Representative: Gulde & Partner

(56) References cited:
- EP-A2- 2 295 282
- EP-A2- 2 530 776
- JP-A- 2016 005 064
- US-A- 5 789 970
- US-A1- 2007 080 661
- US-A1- 2007 268 062
- US-A1- 2013 278 065
- US-A1- 2014 346 982
- US-A1- 2015 293 180
- US-B1- 6 434 077
- KAHNG D ET AL: "A floating gate and its application to memory devices", BELL SYSTEM TECHNICAL JOURNAL, AT AND T, SHORT HILLS, NY, US, vol. 46, no. 6, 1 July 1967 (1967-07-01), pages 1288-1295, XP011631084, ISSN: 0005-8580, DOI: 10.1002/J.1538-7305.1967.TB01738.X [retrieved on 2014-03-15]
- ZEV WEISS ET AL: "Mjölnir", INTERACTIONS OF NVM/FLASH WITH OPERATING SYSTEMS AND WORKLOADS, ACM, 2 PENN PLAZA, SUITE 701 NEW YORK NY 10121-0701 USA, 4 October 2015 (2015-10-04), pages 1-10, XP058075739, DOI: 10.1145/2819001.2819006 ISBN: 978-1-4503-3945-2
- Nxp: "PMD2001D", , 1 January 2009 (2009-01-01), XP055338741, Retrieved from the Internet: URL:http://www.nxp.com/documents/data_shee t/PMD2001D.pdf [retrieved on 2017-01-25]

## Description

### Field of the Invention

The present invention relates to a control unit for a battery system, to a battery system comprising such a control unit and to a method for a startup of such a control unit.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle. One or more battery modules are mechanically and electrically integrated, equipped with a thermal management system and set up for communication with one or more electrical consumers in order to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned information a battery system usually comprises a battery management unit (BMU) and/or a battery management system (BMS). Such control units may be an integral part of the battery system and disposed within a common housing or may be part of a remote control unit communicating with the battery system via a suitable communication bus. In both cases, the control unit communicates with the electrical consumers via a suitable communication bus, e.g. a CAN or SPI interface.

The BMS/BMU is usually coupled to the controller of one or more electrical consumers as well as to each of the battery modules of the battery system. Usually each battery module comprises a cell supervision circuit (CSC) that is configured to maintain the communication with the BMS/BMU and with other battery modules. The CSC may be further configured to monitor the cell voltages of some or each of the battery module's battery cells and to actively or passively balance the voltages of the individual battery cells within the module.

The service life of the aforementioned control units, i.e. BMS; BMU and CSC, might exceed the service life of the controlled battery cell(s). In principle, control units that were introduced to the market by an original equipment manufacturer (OEM) might thus be reused with replacement battery cells once the original cells quit functioning. However, as control units and battery cells are perfectly coordinated such reuse poses high risks for battery malfunctions. And as malfunctioning battery cells might lead to fire, explosions and/or release of harmful substances, OEMs are interested in preventing the reuse of battery control units.

US 2007/080661 A1 discloses a battery device for electronic equipment, the battery device comprising a case, a battery cell and a control board. The control board is connected to cell terminals and comprises battery terminals for the electronic equipment. The control board is a programmable switch that can be mounted to a battery system as an additional part for disconnecting the cell terminals and battery terminals if a certain condition is fulfilled.

EP2530776 A2 relates to a voltage monitoring system and voltage monitoring module and relates in particular to a voltage monitoring system and voltage monitoring module to monitor the voltage of cells in a battery pack utilizing multiple cells coupled in series as one battery cell.

It is thus an object of the present invention to overcome or at least reduce the disadvantages of the prior art and to provide a control unit for a battery system that allows for preventing its reuse after an OEM has introduced it to the market.

### Summary of Invention

One or more of the drawbacks of the prior art could be avoided or at least reduced by means of the present invention. In particular, according to a first aspect of the invention a control unit for a battery system is provided. The control unit comprises a power input for an operation voltage that is provided by at least one battery cell, a control module that is configured for performing at least control function with respect to the at least one battery cell, and a startup module connected between the power input and the control module. In order to perform the at least one control function, the control module must be supplied with the operation voltage. The startup module comprises at least one non-volatile memory element that is storing a security key, a verification circuit that is configured for validating the security key and an activation circuit that is configured for interconnecting the power input, i.e. the operation voltage, to the control module in response to the validation of the security key. According to the invention, the non-volatile memory element is configured for irreversibly erasing the security key in response to an activation signal, wherein the activation signal is related to an initial startup of the control unit.

In the context of the present invention, a control unit for a battery system can be one of a BMS, BMU or CSC and may further be an electronic circuit that is configured for controlling an individual battery cell. Usually, a control unit comprises one or more integrated circuits (ICs) that are mounted on a suitable circuit carrier, e.g. a printed circuit board (PCB). A control unit according to the present invention is continuously powered by at least one battery cell, preferably by a battery cell that is controlled by the control unit. The at least one battery cell might be a part of a battery system or a battery module that is controlled by the control unit. Preferably, the control unit is powered by the at least one battery cell during the whole service life of the controlled battery system, battery module or battery cell. In other words, once the control unit is started up by initially applying an operation voltage to its power input, it will be constantly supplied with an operation voltage by the at least one battery cell.

According to the present invention, the correct function of a battery cell, battery module or battery system depends on the control module performing at least one control function with respect to at least one battery cell, preferably with respect to all battery cells of a battery module or battery system. The control functions preferably comprise measurements of cell voltages, cell currents, cell resistances or cell capacities. Further preferred, the control functions also comprise the active or passive balancing of cell voltages or cell currents of a plurality of battery cells. Preferably, the control module comprises means for detecting a voltage of at least one battery cell and/or the control module comprises means for balancing the voltages of a plurality of battery cells. In order to perform any of these control functions, the control module must be supplied with an operation voltage. According to the invention, the prerequisite for the control module being supplied with the operation voltage is the validation of a security key stored in a non-volatile memory element of the control unit.

The non-volatile memory element is part of a startup module that is interconnected between the power input and the control module of the control unit. Preferably, the security key becomes stored in the non-volatile memory element during the assembly or during the testing of the control unit. Then, the security key becomes stored in the non-volatile memory element before an initial startup of the control unit, i.e. before an operation voltage is supplied to the control unit for the first time. According to a particularly preferred embodiment, the security key is hardware encoded in the startup module. Then, the non-volatile memory element is assembled rather than written. Exemplarily, the security key is encoded in the start up module using at least one fusebit, e.g. a non-readable fusebit. In this embodiment, the non-volatile memory element comprises the at least one fusebit. Alternatively, the non-volatile memory element is principally capable of being written and being read multiple times. The non-volatile memory element may then comprise a flash memory, an SRAM combined with a fusebit, a FeRAM, an MRAM or a phase-change memory.

According to the present invention, the security key is irreversibly erased in response to an activation signal, wherein the activation signal is related to an initial startup of the control unit. As the validation of the security key is the prerequisite for an operation voltage to be supplied to the control module, the control unit of the present invention can be activated only once. In other words, a repeated startup is impossible once the activation signal has been received by the startup module. In other words, the security key can only be validated by the verification circuit for a single time before it is irreversibly erased. Thus, any reuse of the control unit can be prevented by the OEM that usually performs a first startup of the control unit.

If the security key is hardware encoded in the startup module, irreversibly erasing the security key comprises an irreversible physical modification of the non-volatile memory element. In a non-volatile memory element comprising at least one fusebit, such modification preferably comprises blowing the fusebit. In a fusebit comprising a fuse, the fusebit is blown by setting the fuse non-conductive. In a fusebit comprising an antifuse, the fusebit is blown by setting the antifuse conductive. In a non-volatile memory element that is principally capable of being written and read multiple times, e.g. a flash memory, the security key can be irreversibly erased by writing a value to the non-volatile memory element that is different from the security key and by shutting of any write capability of the non-volatile memory element afterwards. In other words, in response to the activation signal the writing access of the non-volatile memory element is deprived after overwriting the security key with another value.

Further preferred, the non-volatile memory element is configured for outputting the security key to the verification circuit in response to the operation voltage being applied to the startup module. In other words, the security key is output to the verification circuit once the operation voltage is supplied from the power input of the control unit to the startup module. Particularly preferred, the activation signal itself is the operation voltage being applied to the non-volatile memory element for longer than a predetermined time interval. Once the operation voltage is supplied to the startup module, the security key is preferably output from the non-volatile memory almost immediately, i.e. within the predetermined time interval. Outputting the security key might comprise a read-out operation of a flash memory or an SRAM. When the predetermined time interval is exceeded, the security key is erased, e.g. by the operation voltage irreversibly altering the hardware of the non-volatile memory element. Exemplarily, a fuse is set non-conductive or an antifuse is set conductive after being exposed to the operation voltage for longer than the predetermined time interval. The burned fusebit might amend an input to a bistable circuit or cut a write line of a flash memory. According to this embodiment, outputting and irreversibly erasing the security key are realized due to supply of the operation voltage to the startup module and thus simple circuit designs are applicable.

According to an alternative embodiment, one of the verification circuit and the activation circuit is further configured for generating the activation signal in response to the validation of the security key. In other words, once the security key is validated one of these circuits generates the activation signal, wherein the activation signal may be a certain voltage level, voltage edge, voltage transient or voltage sequence. Particularly preferred, the activation signal is a voltage sequence that initially causes a value that is different from the security key to be written to the non-volatile memory element and then causes a write access to the non-volatile memory element to be irreversibly destroyed. Using a flash memory as non-volatile memory element, the voltage sequence preferably comprises an write voltage of the flash memory followed by a voltage spike, wherein the voltage spike is configured to blow a fuse connected to a data input of the flash memory. Using a non-volatile memory element comprising a fusebit, the voltage sequence preferably comprises a voltage spike high enough to blow the fusebit and low enough to do no harm to other components of the control unit.

According to a further preferred embodiment, the activation signal is externally applied to the startup module after initially applying the operation voltage to the power input. In other words, the activation signal is input to the control unit after the security key has been output and validated and after a power interconnection between power input and control module has been established. Preferably, the control unit comprises a further contact pad for inputting the activation signal to the startup module. Alternatively, the activation signal might be input via the power input of the control unit and particularly preferred it is modulated on an operation voltage of the control unit. Exemplarily, a voltage spike may be modulated on the operation voltage, wherein the voltage spike is sufficient for blowing a fusebit within the non-volatile memory element, while being innocuous to other electric components of the control unit.

According to a preferred embodiment, the non-volatile memory element comprises an inverter, i.e. logic NOT gate, with an inverter input and an inverter output. The non-volatile memory element further comprises a fuse that is interconnecting the inverter input with a first operation voltage of the inverter. The fuse is configured to be set non-conductive by the activation signal. In such basic configuration of the non-volatile memory element, the fuse provides the first operation voltage, e.g. a high operation voltage V_{DD}, to the inverter input such that a second operation voltage, e.g. a low operation voltage V_{SS} or GND, is output at the inverter output. Therein, the second operation voltage at the inverter output represents one bit of the security key. In response to the activation signal, the fuse is set non-conductive and the first operation voltage is no longer applied to the inverter input. Thus, the inverter output is set floating and the security key bit is lost. Preferably, a non-volatile memory element comprises a plurality of such inverter fuse combinations such that the outputs of the plurality of inverters become randomly distributed in response to the activation signal.

Further preferred, the non-volatile memory element further comprises an antifuse that is interconnecting the inverter input with the second operation voltage of the inverter. The antifuse is configured to be set conductive by the activation signal. Hence, in response to the activation signal the inverter output switches from the second operation voltage to the first operation voltage, i.e. the one bit of the security key is inverted. Alternatively, the non-volatile memory element further comprises a resistance element that is interconnecting an inverter output with the first operation voltage of the inverter. The resistance element has an electric resistance which is larger than the resistance of the conductive fuse and that is smaller than the resistance of the blown, non-conductive fuse. Hence, in response to the activation signal the inverter output is switched from the second operation voltage to the first operation voltage, i.e. one bit of the security key is inverted.

Particularly preferred, the non-volatile memory element comprises a plurality of such inverter fuse combinations, with a first subset of inverter fuse combinations comprising an antifuse as described above and with a second subset of inverter fuse combinations comprising a resistance element as described above. Particularly preferred, the activation signal is the first operation voltage of the inverter being applied for longer than a predetermined time interval and the fuses and/or antifuses are configured to blow if the first operation voltage is applied thereto for longer than for the predetermined time interval.

According to another preferred embodiment, the non-volatile memory element comprises a bistable circuit and a fuse connected to a data input of the bistable circuit. The fuse is configured to be set non-conductive by the activation signal. Further preferred, the fuse is interconnecting the data input and a first operation voltage of the bistable circuit. Again, the data input is in a predetermined state as long as the fuse is conducting and the first operation voltage is applied to the data input. Hence, a data output of the bistable circuit is determined. The data input is set floating if the fuse is set non-conductive in response to the activation signal and hence the data output becomes undetermined. Preferably, the non-volatile memory element comprises a plurality of such bistable circuits.

Particularly preferred, the non-volatile memory element further comprises a resistance element that is interconnecting the data output of the bistable circuit and a first operation voltage of the bistable circuit. The resistance element has an electric resistance that is larger than the resistance of the conductive fuse and that is smaller than the resistance of the blown non-conductive fuse. Alternatively, the non-volatile memory element further comprises an antifuse that is interconnecting the data input of the bistable circuit with a second operation voltage of the bistable circuit and that is configured to be set conductive by the activation signal. Hence, in response to the activation signal the data input and the data output of the bistable circuit are inverted. Particularly, the data output is set to the first operation voltage instead of being set floating once the fuse is set non-conductive in response to the activation signal. Preferably, the activation signal is equal to the first operation voltage of the bistable circuit being applied for longer than a predetermined time period and/or at least one SRAM is used as a bistable circuit. According to an alternatively preferred embodiment, the non-volatile memory element of the control unit comprises at least one floating gate transistor.

According to a preferred embodiment, the verification circuit comprises at least one differential amplifier configured for amplifying the data output of the non-volatile memory element. The differential amplifier comprises an inverting input and a non-inverting input, wherein the inverting input is interconnected with the output of the non-volatile memory element and wherein a reference voltage is input to the non-inverting input. The reference voltage may be derived from one of the first and second operation voltages of the control unit, e.g. via a voltage divider. The differential amplifier further comprises a first supply input and a second supply input, wherein the first and second operation voltage are supplied to the supply inputs, respectively. Further preferred, the differential amplifier is configured as an operational amplifier and comprises a feedback circuit, e.g. a negative feedback. Alternatively, the differential amplifier is configured as a comparator. The verification circuit further comprises a verification output to which a verification result or verification signal applies. The polarity of the verification circuit's output depends on the output of the non-volatile memory and comprises an amplitude that is larger than that of the non-volatile memory element.

Further preferred, the activation circuit of the control unit according to the present invention comprises at least one switch element that is configured for interconnecting the power input and the control module in response to a specific output of the differential amplifier. Particularly preferred, the switch element is configured to be set conductive by a specific output of the verification circuit, i.e. by an output with specific polarity. Particularly preferred, the switch element comprises at least one of a transistor, e.g. a BPT, a FET, JFET, MOSFET, IGBT or the like. Further preferred, the amplitude of an output of the non-volatile memory element is required to be amplified in order to switch the switch element.

Another aspect of the present invention relates to a battery system, comprising a control circuit according to the present invention as described above. The control unit is preferably part of at least one of a battery management system (BMS), a battery monitoring unit (BMU) or a cell supervision circuit (CSC) of the battery system. The battery system further comprises a plurality of battery cells and/or battery modules and may further comprise a cooling system.

Another aspect of the present invention relates to a method for startup of a control unit for a battery system. The control unit comprises a power input for an operation voltage provided by at least one battery cell, a control module configured for performing at least control function with respect to the at least one battery cell and a startup module connected between the power input and the control module. The method according to the present invention comprises the steps of setting a value of a non-volatile memory element in the startup module to a predetermined first value, supplying an operation voltage of the control unit to the power input of the control unit by the at least one battery cell, outputting the first value from the non-volatile memory element, activating the control module of the control unit if the output value equals a predetermined first value, and irreversibly setting the value of the non-volatile memory element to a second value different from the first value in response to an activation signal.

The method may further comprise the step of: performing at least one control function by the control module in response to the activation signal. The control functions may comprise the measurement of cell voltages, cell currents, cell resistances or cell capacities and may further comprise the active or passive balancing of cell voltages or cell currents of a plurality of battery cells. According to the method of the invention, the value output from the non-volatile memory element must equal the first value for the control module to be supplied with the operation voltage. The method may further comprise the step of: connecting at least one battery cell to the control unit for supplying the operation voltage to the control unit.

Preferably, setting of a value in the non-volatile memory element to the first predetermined value, i.e. storing a first predetermined value within the non-volatile memory element, occurs during assembling or testing of the control unit. In other words, the first predetermined value is stored in the non-volatile memory element before an initial startup of the control unit. The first predetermined value is preferably hardware encoded into the non-volatile memory element, e.g. by interconnecting a certain voltage level and an input of the non-volatile memory element using a fuse or antifuse. Alternatively, the first predetermined value is written to a non-volatile memory element that is in principle capable of being written and read multiple times, e.g. a flash memory, during testing of the control unit.

In the method of the invention, the value saved in the non-volatile memory element is irreversibly set to a second value different from the first value in response to an activation signal. The activation signal may be a response to the first value being output from the non-volatile memory element. Preferably, the activation of the control module comprises the step of interconnecting the power input of the control unit with the control module, i.e. applying the operation voltage of the control unit to the control module. The activation signal might also be a prerequisite for the operation voltage to be supplied to the control module and thus the method of the invention can be performed only once. Hence, the control unit of the present invention can be activated only once, while a repeated startup is impossible, once the activation signal has been received by the startup module Thus, any reuse of the control unit that is not authorized by the OEM can be prevented.

Further preferred, the step of irreversibly setting the value of the non-volatile memory element to a second value different from the first value in response to an activation signal comprises an irreversible physical modification of the non-volatile memory element. In a non-volatile memory element comprising at least one fusebit, the step preferably comprises blowing the at least one fusebit. In a fusebit comprising a fuse, the step comprises setting the fuse non-conductive. In a fusebit comprising an antifuse, the step comprises setting the antifuse conductive. In a non-volatile memory element that is principally capable of being written and read multiple times, e.g. a flash memory, the step comprises writing the second value to the non-volatile memory element and then shutting of the write capability of the non-volatile memory element. Depriving the writing access of the non-volatile memory element may comprise an irreversible physical modification as well.

In a preferred embodiment, the step of outputting the first value from the non-volatile memory element occurs only in response to the step of applying the operation voltage to the startup module. In other words, the first value is output from the non-volatile memory element once the operation voltage is supplied from the power input of the control unit to the startup module. Preferably, the first value is output almost immediately once the operation voltage is supplied to the startup module, i.e. within a predetermined time interval. Further preferred, the method further comprises the step of applying the operation voltage to the non-volatile memory element for longer than a predetermined time interval as an activation signal. In other words, once the operation voltage is supplied to the startup module, the first value is output from the non-volatile memory within the predetermined time interval and the second value is set to the non-volatile memory after the predetermined time interval is exceeded.

Preferably the method further comprises the step of: generating the activation signal if the output value equals a predetermined first value. The generation of the activation signal may occur in the startup module or in the control module of the control unit. The control unit may further comprise an activation signal generation circuit configured for generating the activation signal. The method may further comprise the step of generating a certain voltage level, voltage edge, voltage transient or voltage sequence as an activation signal. Preferably the method comprises the step of generating a sequence of a write voltage of the non-volatile memory element and a voltage spike for blowing a fuse as an activation signal.

Alternatively, the method comprises the step of externally applying the activation signal to the startup module after applying the operation voltage to the power input. In other words, the activation signal is applied to the control unit after output and validation of the first value and after establishing a power interconnection between power input and control module. Particularly preferred, the activation signal is input via the power input of the control unit, e.g. modulated on an operation voltage of the control unit.

Further aspects of the present invention are disclosed in the dependent claims or the following description of the drawings.

### Brief Description of the Drawings

Features will become apparent to those of ordinary skill in the art by describing in detail exemplary embodiments with reference to the attached drawings in which:
- Fig. 1: schematically illustrates the workflow for the production of a battery system;
- Fig. 2: illustrates a flow diagram of a method for startup of a control unit for a battery system according to an embodiment;
- Fig. 3: schematically illustrates a control unit according to an embodiment; and
- Fig. 4: schematically illustrates exemplary circuit diagrams of a startup module according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

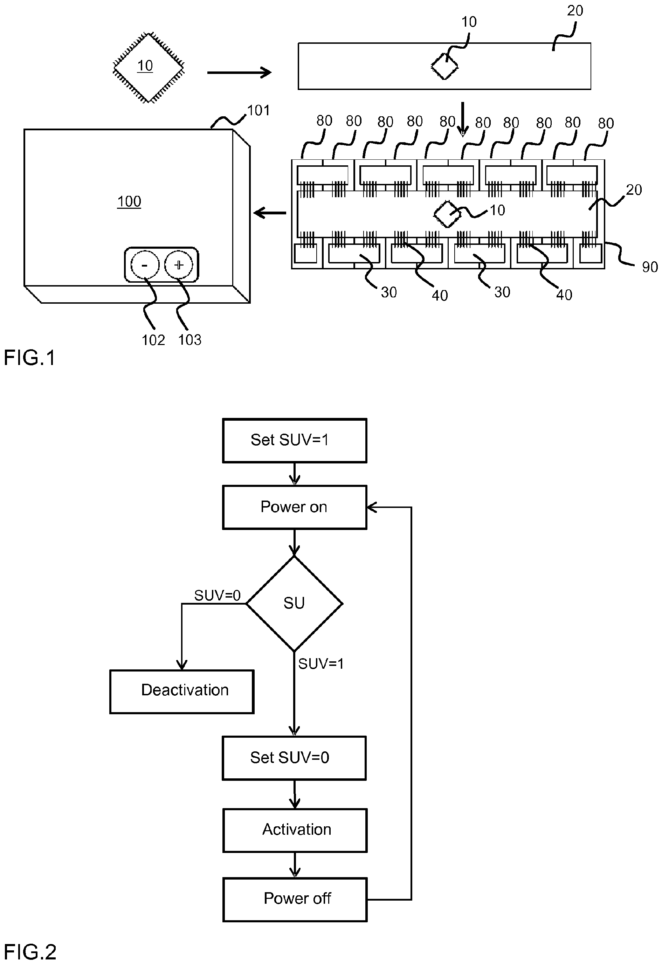

Figure 1 schematically illustrates a workflow for a production process of a battery system 100, particularly with respect to a control unit 10 according to the present invention.

As shown in Figure 1 a first step of the production process is the production of a cell supervision circuit (CSC) as a control unit 10 according to the invention. The control unit 10 is produced by a semiconductor chip manufacturer, wherein the production process comprises at least the steps of FEOL, BEOL, dicing and packaging. Several testing procedures are performed on the control unit 10, usually before wafer dicing or packaging. However, the packaged control unit 10 can be object to testing as well. In the testing procedures several electronic functions of the control unit 10 are tested, particularly with respect to at least one control function of the control unit 10. The testing might comprises voltage measurement tests, wherein predetermined voltages are applied to the control unit 10. In an offset calibration a voltage measurement value is determined if no voltage is applied to the control unit 10. The results of voltage measurement tests are compared to the applied voltages and calibration data derived from this comparison is saved to the control unit 10. Stress tests may be performed on the control unit 10 by repeatedly performing some of its electronic functions.

In a second step of the workflow shown in Figure 1, the control unit 10 is assembled on a suitable circuit carrier 20, such as a printed circuit board (PCB) or flexible circuit board. Exemplarily, the control unit 10 is flip-chip mounted to the circuit carrier 20. Electric connections between the control unit 10 and the circuit carrier 20 are established by soldering, which may decrease the analogue performance of the control unit 10.

In a third step of the workflow of Figure 1, the circuit carrier 20 comprising the control unit 10 is mounted to a plurality of secondary battery cells 80 in order to form a battery module 90. Particularly, the terminals (not shown) of each of the battery cells 80 are connected to the circuit carrier via wire bonds 40. The battery cells 80 are thus connected to the control unit 10 and an operation voltage is supplied to the control unit 10 by at least one of the battery cells 80. A method for startup of the control unit 10 according to the invention might occur at least partially during this stage of the battery system's production process.

Preferably, the control unit 10 is activated by initially providing the operation voltage to the control unit 10 by at least one battery cell 80. For a control unit 10 according to the invention this initial startup is the only startup. The control unit 10 is supplied with the operation voltage of the at least one battery cell 80 during the entire service life of the battery module 90. After the battery module's 90 service life ended, the control unit 10 cannot start up again. In the third step the battery cells 80 may further be interconnected to each other via busbars 30.

In a fourth step of the production process of the battery system 100 shown in Figure 1, a plurality of battery modules 90 are connected to each other to form the battery system 100. Therein, the terminals (not shown) of the battery modules 90 are connected to each other using busbars (not shown). Further the CSCs 10 of the battery modules 90 are connected to each other as well as to a BMS (not shown) using a suitable communication bus, e.g. SPI or CAN. The plurality of interconnected battery modules 90 is placed in a housing 101 and a cooling circuit may be set up for cooling the battery modules 90. The plurality of battery modules 90 provides a system voltage and system current via the system terminals 102, 103.

Figure 2 illustrates a more detailed flow diagram of a method for startup of a control unit 10 for a battery system 100 according to an embodiment.

In a first step of the method for startup of a control unit 10 for a battery system 100 a startup value SUV of the control unit 10 is set to a first value. In the illustrated method, the first value is a one digit value equal to "1". This startup value is either written or hardware encoded into a non-volatile memory element 14. The setting of the startup value might occur during one of the first and second step of the production process workflow as illustrated in Figure 1.

In a next step of the startup method according to an embodiment, the control unit 10 is powered on by applying an operation voltage of the control unit 10 to a power input 11 of the control unit 10. This step might occur during the third step of the production process workflow as illustrated in Figure 1. In other words, the control unit 10 is powered on as it becomes assembled with at least one battery cell 80 to form a battery module 90.

The startup method of the control unit 10 proceeds with a step of outputting the startup value from the non-volatile memory element 14. Subsequently it is determined whether or not the output startup value equals a predetermined value. According to the illustrated embodiment, the predetermined value is equal to "1". As the startup value was set to be "1" before, it is determined that the startup value equals the predetermined value. As illustrated in Figure 2, the method proceeds in that the startup value is now set to a second value different from the predetermined value. In the illustrated embodiment, the startup value is set to be"0". After amending the startup value, the startup method is completed by activating the control unit 10, i.e. by supplying an operation voltage to a part of the control unit 10 that is configured to perform at least one control function with respect to a battery module 90 and/or a battery system 100.

As illustrated in Figure 2 a control unit 10 according to the invention may be turned off by depriving a power supply to the control unit 10. This might occur at the end of service life of the battery module 90 that supplies the control unit 10 or when the control unit 10 is separated from that battery module 90. If the control unit 10 is powered on again after being turned of, e.g. by connecting the control unit 10 to a replacement battery cell, the startup method starts again from the second method step as illustrated in Figure 2. In other words, the control unit 10 again receives an operation voltage at its power input 11.

The second startup of the control unit 10 proceeds in that the startup value is output from the non-volatile memory element 14. Subsequently it is determined whether or not the output startup value equals a predetermined value. As the startup value was set to the second value ("0") at the end of the first startup, it is determined that the startup value does not equal the predetermined value. Hence, the startup method is aborted and the operation voltage is not supplied to the part of the control unit 10 that is configured to perform at least one control function with respect to a battery module 90 and/or a battery system 100. Hence, the startup method of the invention provides that startup of the control unit 10 occurs only once.

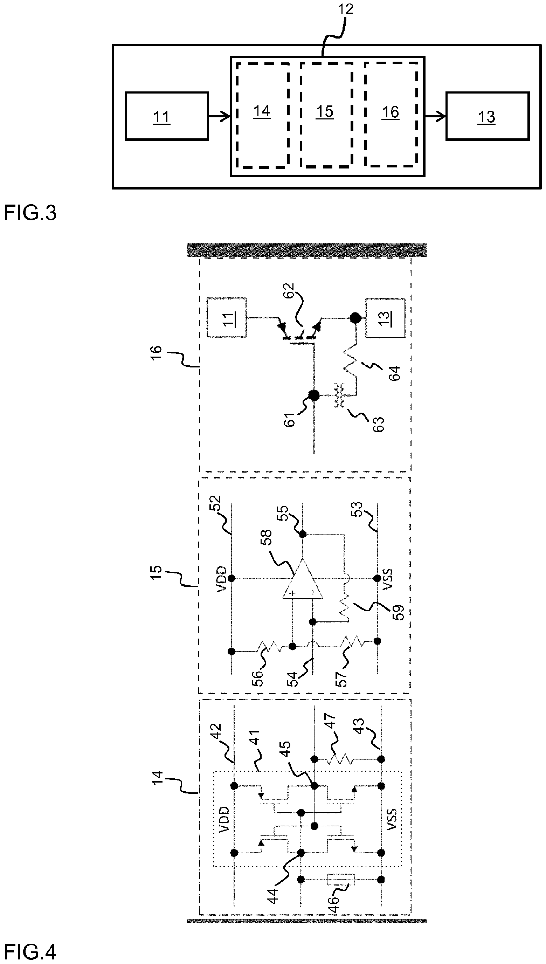

Figure 3 schematically illustrates a control unit 10 for a battery system 100 according to an embodiment. The control unit 10 comprises a power input 11 that is configured to be connected to at least one battery cell 80 for receiving an operation voltage of the control unit 10. The power input 11 preferably comprises a contact pad that is configured to be electrically connected to at least one battery cell 80, e.g. via at least one wire bond or the like.

The power input 11 is electrically connected to a control module 13 via a startup module 12. The control module 13 is configured to perform at least one control function with respect to at least one battery cell 80. The control functions may comprise the measurement of cell voltages, cell currents, cell resistances or cell capacities and, for a plurality of battery cells, and may further comprise the active or passive balancing of cell voltages or cell currents. The control module 13 may comprise at least one contact pad (not shown) for establishing an electronic contact to at least one battery cell 80. The electronic contact may be established via a wire bond 40 that may be different from the wire bond for connecting at least one battery cell 80 with the power input 11 of the control module 10.

The startup module 12 is configured for performing a startup method of the control unit 10 as described above and comprises at least a non-volatile memory element 14, a verification circuit 15 and an activation circuit 16. The non-volatile memory element 14 is configured to safe a startup value, i.e. security key, to output the startup value in response to an operation voltage and to irreversibly erase the startup value in response to an activation signal. The verification circuit 15 is configured to validate a startup value output from the non-volatile memory element 14, e.g. to compare the output startup value with a predetermined value, and to output a verification result, wherein the amplitude of the verification result is preferably larger than the output from the non-volatile memory 14. The activation circuit 16 is configured to receive the validation result from the verification circuit 15 and to provide an electrical connection between the power input 11 and the control unit 13 in dependence of the validation result. The activation circuit 16 comprises at least one switch element.

Figure 4 illustrates exemplary circuit diagrams of a startup module 12 according to the invention.

The leftmost section of Figure 4 illustrates a schematic circuit diagram of a non-volatile memory element 14 according to an embodiment of the invention. The central element of the non-volatile memory element 14 is an SRAM 41, comprising a first inverter and a second inverter. Each of the first inverter and the second inverter is connected to a first operation line 42 providing operation voltage V_{DD} and to a second operation voltage line 43 providing second operation voltage V_{SS}. An input node of the first inverter is electrically connected to a data input 44 of the SRAM 41. The input node of the first inverter is further electrically connected to the gate of a p-channel MOSFET interconnected between the first operation line 42 and a data output 45 of the SRAM 41. The input node of the first inverter is further electrically connected to the gate of an n-channel MOSFET interconnected between the second operation line 43 and the data output 45 of the SRAM 41. The data output 45 of the SRAM 41 is electrically connected to the gate of a further p-channel MOSFET interconnected between the first operation line 42 and the data input 44 of the SRAM 41. The input node of the second converter is further electrically connected to the gate of a further n-channel MOSFET interconnected between the second operation line 43 and the data input 44 of the SRAM 41.

The SRAM 41 is set to an operating state as soon as first and second operation voltages are supplied to the SRAM 41. A logic value input to the data input 44 of SRAM 41 is encoded by either the first operation voltage VDD ("1") or the second operation voltage V_{SS} ("0"). A logic value input to the data input 44 is inverted by the first inverter and the inverted value is supplied to the data output 45 of the SRAM 41. The inverted value is further input to the second inverter and thus reproduces the initial logic value at the data input 44. The initial logic value is thus saved in the SRAM 41 as long as the operation voltages are supplied.

The non-volatile memory element 14 of the control unit 10 further comprises a fuse 46 that electrically connects the data input 44 of the SRAM 41 and the second operation line 43. As soon as the operation voltages V_{SS}, V_{DD} are supplied to the SRAM 41 the second operation voltage V_{SS}, i.e. logic value "0", is applied to the data input 44 of SRAM 41. Hence logic value "1" is supplied to the data output 45 of SRAM 41. In the context of the invention, by assembling the fuse 46 a startup value (security key) "1" is set to the non-volatile memory element 14. Preferably, the fuse 46 was positioned during assembly of the control unit 10.

The fuse 46 is further configured to be set non-conductive if the operation voltage V_{SS} is applied to the fuse for a time interval longer than a predetermined time interval. In other words, in the non-volatile memory element 14 illustrated in Figure 4 the second operation voltage V_{SS} being applied for a time interval longer than a predetermined time interval is the activation signal for the fuse 46. As soon as the fuse 46 is set non-conductive, the first operation voltage V_{SS} no longer applies to data input 44 and the data input 44 is set floating.

Non-volatile memory element 14 further comprises the resistance element 47 with an electric resistance that is larger than the resistance of the conductive fuse 46 and that is smaller than the electric resistance of the non-conductive fuse 46. Thus, the data output 45 is set to the second operation voltage V_{SS} once fuse 46 is set non-conductive. In the context of the invention, the startup value formerly saved in SRAM 41 is thus irreversibly set to a second value that is different from the first value. In other words, the security key is irreversibly erased, once the fuse 46 is set non-conductive by the activation signal.

The middle section of Figure 4 illustrates a schematic circuit diagram of a verification circuit 15 according to an embodiment of the invention. The illustrated embodiment of the verification circuit 15 comprises at least one operational amplifier 58. A first operation voltage V_{DD} is supplied to first supply input of the operational amplifier 58 by a first operation line 52 and a second operation voltage V_{SS} is supplied to a second supply input of the differential amplifier 58 by a second operation line 53. The operational amplifier 58 further comprises an inverting input ("-") and a non-inverting input ("+"). The voltage level at the data output 45 of SRAM 41 of the non-volatile memory element 14 is supplied to an input line 54 that is connected to the inverting input of the operational amplifier 58.

Verification circuit 15 further comprises a voltage divider with a first resistor 56 interconnected between the first operation line 52 and the non-inverting input of operational amplifier 58 and with a second resistor 57 interconnected between the second operation line 53 and the non-inverting input of the operational amplifier 58. The resistance of the first resistor 56 equals the resistance of the second resistor 57 and thus half of the first operation voltage V_{DD} is supplied to the non-inverting input of operational amplifier 58 as a reference voltage. Hence, an output 55 of the operational amplifier 58 is set to a maximal positive voltage if a logic value "1" is applied to the data output 45 of SRAM 41 and is set to minimal negative voltage if a logic value "0" is applied to the data output 45 of SRAM 41. The output 55 of amplifier 58 is fed back to the inverting input via a third resistor 59. Thus, the output of operational amplifier 58, i.e. a voltage level at the amplifier output 55, is further amplified.

The rightmost section of Figure 4 illustrates a schematic circuit diagram of an activation circuit 16 according to an embodiment of the invention. The illustrated activation circuit 16 receives the voltage that is output from the verification circuit at output 55 via the gate line 61 as an input. The activation circuit 16 further comprises an n-channel IGBT 62 as switch element. The gate of the IGBT 62 is connected to gate line 61, the collector of IGBT 62 is connected to the power input 11 of the control unit 10 and the emitter of the IGBT 62 is connected to the control module 13 of control unit 10. If a logic value "1" is output at the data output 45 of the non-volatile memory 14, the positive voltage V_{DD} is amplified and output from the verification circuit 15 and applied to the gate line 61 of the IGBT 62. Thus, IGBT 62 is set conductive and provides a conductive connection between the power input 11 and the control module 13 of control unit 10. The activation circuit 16 shown in Figure 4 further comprises a loopback connection that connects the emitter of IGBT 62 with the gate of IGBT 62. The loopback connection maintains the conductive connection between collector and the emitter of the IGBT 62 even if the output of the verification circuit 15 should cease for any reason. The loopback connection may comprise a loopback resistor 63, a loopback transformer 64 and/or further components in order to supply a sufficiently high voltage to the gate of IGBT 62. As the operation voltage is supplied to the control unit 13 it is enabled to perform at least one control function with respect to at least one battery cell 80.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

## Claims

1. Control unit (10) for a battery system (100), comprising
a power input (11) for an operation voltage of the control unit (10) provided by at least one battery cell (80);
a control module (13) configured for performing at least control function with respect to the at least one battery cell (80) while being supplied with the operation voltage and comprising means for detecting a voltage of the least one battery cell (80); and
a startup module (12) connected between the power input (11) and the control module (13) and comprising at least one non-volatile memory element (14) storing a security key, a verification circuit (15) configured for validating the security key and an activation circuit (16) configured for interconnecting the operation voltage to the control module (13) in response to the validation of the security key,
wherein the non-volatile memory element (14) is configured for irreversibly erasing the security key in response to an activation signal that is related to an initial startup of the control unit (10).

2. Control unit (10) according to claim 1, wherein the non-volatile memory element (14) is configured for outputting the security key to the verification circuit (15) in response to the operation voltage being applied to the startup module (12).

3. Control unit (10) according to claim 1 or 2, wherein the activation signal is the operation voltage being applied to the non-volatile memory element (14) for longer than a predetermined time interval; wherein one of the verification circuit (15) and the activation circuit (16) is further configured for generating the activation signal in response to the validation of the security key; or wherein the activation signal is externally applied to the startup module (12) after initially applying the operation voltage to the power input (11).

4. Control unit (10) according to any one of the preceding claims, wherein the non-volatile memory element (14) comprises a bistable circuit (41) and a fuse (46) connected to a data input (44) of the bistable circuit (41) and configured to be set non-conductive by the activation signal.

5. Control unit (10) according to claim 4, wherein the fuse (46) is interconnecting the data input (44) and an operation voltage of the bistable circuit (41).

6. Control unit (10) according to claim 4 or 5, further comprising a resistance element (47) interconnecting a data output (45) of the bistable circuit (41) and an operation voltage of the bistable circuit (41), wherein an electric resistance of the resistance element (47) is larger than the resistance of the conductive fuse (46).

7. Control unit (10) according to claim 4 or 5, further comprising an antifuse interconnecting the data input (44) and a second operation voltage of the bistable circuit (41) and configured to be set conductive by the activation signal.

8. Control unit (10) according to any one of the claims 4 to 7, wherein the fuse is configured to be set non-conductive by operation voltage of the bistable circuit (41) being applied for longer than a predetermined time interval.

9. Control unit (10) according to any one of the claims 4 to 8, comprising an SRAM (41) as bistable circuit.

10. Control unit according to any one of the claims 1 to 3, wherein the non-volatile memory element (14) comprises a floating gate transistor.

11. Control unit (10) according to any one of the preceding claims, wherein the verification circuit (15) comprises at least one differential amplifier (58) configured for amplifying the data output of the non-volatile memory element (14).

12. Control unit (10) according to claim 11, wherein the activation circuit (16) comprises at least one switch element (62) configured for interconnecting the power input (11) and the control module (13) in response to a specific output of the differential amplifier (58).

13. Battery system (100) comprising a control circuit (10) according to any one of the preceding claims as part of at least one of a battery management system, battery monitoring unit or cell supervision circuit (10).

14. Method for startup of control unit (10) for a battery system (100), the control unit (10) comprising a power input (11) for an operation voltage provided by at least one battery cell (80); a control module (13) configured for performing at least control function with respect to the at least one battery cell (80) while being supplied with the operation voltage, and comprising means for detecting a voltage of the least one battery cell (80); and a startup module (12) connected between the power input (11) and the control module (13), the method comprising the steps of:
(a) setting a non-volatile memory element (14) of the startup module (12) to a predetermined first value;
(b) supplying an operation voltage to the power input (11) of the control unit (10) by the at least one battery cell (80);
(c) outputting the first value from the non-volatile memory element (14);
(d) activating the control module element (14) of the control unit (10) if the output value equals the predetermined first value; and
(e) irreversibly setting the value of the non-volatile memory element (14) to a second value different from the first value in response to an activation signal that is related to an initial startup of the control unit (13).

15. Method according to 14, wherein the activation signal is the operation voltage of the control unit (10) being supplied to the non-volatile memory element (14) for longer than a predetermined time interval during step (b); wherein the activation signal is generated if the output value equals the predetermined first value; or wherein the activation signal is externally applied to the control unit (10) after applying the operation voltage.

## Patentansprüche

1. Steuerungseinheit (10) für ein Batteriesystem (100), aufweisend
einen Leistungseingang (11) für eine Betriebsspannung der Steuerungseinheit (10), die von zumindest einer Batteriezelle (80) geliefert wird;
ein Steuerungsmodul (13), das konfiguriert ist, um zumindest eine Steuerungsfunktion bezüglich der zumindest einen Batteriezelle (80) durchzuführen, während es mit der Betriebsspannung versorgt wird, und das Mittel zum Erfassen einer Spannung der zumindest einen Batteriezelle (80) aufweist; und
ein Startmodul (12), das zwischen den Leistungseingang (11) und das Steuerungsmodul (13) geschaltet ist und zumindest ein nicht-flüchtiges Speicherelement (14), das einen Sicherheitsschlüssel speichert, eine Verifizierungsschaltung (15), die konfiguriert ist, um den Sicherheitsschlüssel zu bestätigen, und eine Aktivierungsschaltung (16), die konfiguriert ist, um in Reaktion auf die Bestätigung des Sicherheitsschlüssels die Betriebsspannung mit dem Steuerungsmodul (13) zu verbinden, aufweist,
wobei das nicht-flüchtige Speicherelement (14) konfiguriert ist, um den Sicherheitsschlüssel in Reaktion auf ein Aktivierungssignal, das sich auf einen erstmaligen Start der Steuerungseinheit (10) bezieht, irreversibel zu löschen.

2. Steuerungseinheit (10) nach Anspruch 1, wobei das nicht-flüchtige Speicherelement (14) konfiguriert ist, um den Sicherheitsschlüssel in Reaktion auf das Anlegen der Betriebsspannung an das Startmodul (12) an die Verifizierungsschaltung (15) auszugeben.

3. Steuerungseinheit (10) nach Anspruch 1 oder 2, wobei das Aktivierungssignal das Anlegen der Betriebsspannung für länger als für ein vorbestimmtes Zeitintervall an das nicht-flüchtige Speicherelement (14) ist; wobei eine der Verifizierungsschaltung (15) und der Aktivierungsschaltung (16) ferner konfiguriert ist, um das Aktivierungssignal in Reaktion auf die Bestätigung des Sicherheitsschlüssels zu erzeugen; oder wobei das Aktivierungssignal nach dem erstmaligen Anlegen der Betriebsspannung an den Leistungseingang (11) extern an das Startmodul (12) angelegt wird.

4. Steuerungseinheit (10) nach einem der vorhergehenden Ansprüche, wobei das nicht-flüchtige Speicherelement (14) eine bistabile Schaltung (41) und eine Sicherung (46), die mit einem Dateneingang (44) der bistabilen Schaltung (41) verbunden ist und konfiguriert ist, um vom Aktivierungssignal als nicht-leitend eingestellt zu werden, aufweist.

5. Steuerungseinheit (10) nach Anspruch 4, wobei die Sicherung (46) den Dateneingang (44) und eine Betriebsspannung der bistabilen Schaltung (41) miteinander verbindet.

6. Steuerungseinheit (10) nach Anspruch 4 oder 5, ferner aufweisend ein Widerstandselement (47), das einen Datenausgang (45) der bistabilen Schaltung (41) und eine Betriebsspannung der bistabilen Schaltung (41) miteinander verbindet, wobei ein elektrischer Widerstand des Widerstandselements (47) größer als der Widerstand der leitenden Sicherung (46) ist.

7. Steuerungseinheit (10) nach Anspruch 4 oder 5, ferner aufweisend eine Antifuse, die den Dateneingang (44) und eine zweite Betriebsspannung der bistabilen Schaltung (41) miteinander verbindet und konfiguriert ist, um vom Aktivierungssignal als leitend eingestellt zu werden.

8. Steuerungseinheit (10) nach einem der Ansprüche 4 bis 7, wobei die Sicherung konfiguriert ist, um durch das Anlegen von Betriebsspannung der bistabilen Schaltung (41) für länger als für ein vorbestimmtes Zeitintervall als nicht-leitend eingestellt zu werden.

9. Steuerungseinheit (10) nach einem der Ansprüche 4 bis 8, aufweisend einen SRAM (41) als bistabile Schaltung.

10. Steuerungseinheit nach einem der Ansprüche 1 bis 3, wobei das nicht-flüchtige Speicherelement (14) einen Floating-Gate-Transistor aufweist.

11. Steuerungseinheit (10) nach einem der vorhergehenden Ansprüche, wobei die Verifizierungsschaltung (15) zumindest einen Differenzverstärker (58), der konfiguriert ist, um die Datenausgabe des nicht-flüchtigen Speicherelements (14) zu verstärken, aufweist.

12. Steuerungseinheit (10) nach Anspruch 11, wobei die Aktivierungsschaltung (16) zumindest ein Schaltelement (62), das konfiguriert ist, um in Reaktion auf eine spezifische Ausgabe des Differenzverstärkers (58) den Leistungseingang (11) und das Steuerungsmodul (13) miteinander zu verbinden, aufweist.

13. Batteriesystem (100), aufweisend eine Steuerungsschaltung (10) nach einem der vorhergehenden Ansprüche als Teil zumindest eines eines Batteriemanagementsystems, einer Batterieüberwachungseinheit oder einer Zellenüberwachungsschaltung (10).

14. Verfahren zum Starten einer Steuerungseinheit (10) für ein Batteriesystem (100), wobei die Steuerungseinheit (10) einen Leistungseingang (11) für eine Betriebsspannung, die von zumindest einer Batteriezelle (80) geliefert wird; ein Steuerungsmodul (13), das konfiguriert ist, um zumindest eine Steuerungsfunktion bezüglich der zumindest einen Batteriezelle (80) durchzuführen, während es mit der Betriebsspannung versorgt wird, und das Mittel zum Erfassen einer Spannung der zumindest einen Batteriezelle (80) aufweist; und ein Startmodul (12), das zwischen den Steuerungseingang (11) und das Steuerungsmodul (13) geschaltet ist, aufweist, wobei das Verfahren die folgenden Schritte aufweist:
(a) Einstellen eines nicht-flüchtigen Speicherelements (14) des Startmoduls (12) auf einen vorbestimmten ersten Wert;
(b) Liefern einer Betriebsspannung zum Leistungseingang (11) der Steuerungseinheit (10) durch die zumindest eine Batteriezelle (80);
(c) Ausgeben des ersten Werts vom nicht-flüchtigen Speicherelement (14);
(d) Aktivieren des Steuerungsmodulelements (14) der Steuerungseinheit (10), wenn der Ausgabewert gleich dem vorbestimmten ersten Wert ist; und
(e) irreversibles Einstellen des Werts des nicht-flüchtigen Speicherelements (14) auf einen vom ersten Wert verschiedenen zweiten Wert in Reaktion auf ein Aktivierungssignal, das sich auf einen erstmaligen Start der Steuerungseinheit (13) bezieht.

15. Verfahren nach Anspruch 14, wobei das Aktivierungssignal das Liefern der Betriebsspannung der Steuerungseinheit (10) zum nicht-flüchtigen Speicherelement (14) für länger als für ein vorbestimmtes Zeitintervall während Schritt (b) ist; wobei das Aktivierungssignal erzeugt wird, wenn der Ausgabewert gleich dem vorbestimmten ersten Wert ist; oder wobei das Aktivierungssignal nach Anlegen der Betriebsspannung extern an die Steuerungseinheit (10) angelegt wird.

## Revendications

1. Unité de commande (10) pour un système de batterie (100), comprenant :
une entrée d'alimentation (11) pour une tension de fonctionnement de l'unité de commande (10) fournie par au moins une cellule de batterie (80) ;
un module de commande (13) configuré pour réaliser au moins une fonction de commande par rapport à l'au moins une cellule de batterie (80) tout en étant alimenté par la tension de fonctionnement et comprenant un moyen pour détecter une tension de l'au moins une cellule de batterie (80) ; et
un module de démarrage (12) connecté entre l'entrée d'alimentation (11) et le module de commande (13) et comprenant au moins un élément de mémoire non volatile (14) stockant une clé de sécurité, un circuit de vérification (15) configuré pour valider la clé de sécurité et un circuit d'activation (16) configuré pour interconnecter la tension de fonctionnement au module de commande (13) en réponse à la validation de la clé de sécurité,
dans laquelle l'élément de mémoire non volatile (14) est configuré pour effacer de manière irréversible la clé de sécurité en réponse à un signal d'activation qui est lié à un démarrage initial de l'unité de commande (10).

2. Unité de commande (10) selon la revendication 1, dans laquelle l'élément de mémoire non volatile (14) est configuré pour délivrer en sortie la clé de sécurité au circuit de vérification (15) en réponse à l'application de la tension de fonctionnement au module de démarrage (12).

3. Unité de commande (10) selon la revendication 1 ou 2, dans laquelle le signal d'activation représente la tension de fonctionnement étant appliquée à l'élément de mémoire non volatile (14) pendant une durée supérieure à un intervalle de temps prédéterminé ; où l'un du circuit de vérification (15) et du circuit d'activation (16) est en outre configuré pour générer le signal d'activation en réponse à la validation de la clé de sécurité ; ou dans laquelle le signal d'activation est appliqué de l'extérieur au module de démarrage (12) après avoir appliqué initialement la tension de fonctionnement à l'entrée d'alimentation (11).

4. Unité de commande (10) selon l'une quelconque des revendications précédentes, dans laquelle l'élément de mémoire non volatile (14) comprend un circuit bistable (41) et un fusible (46) relié à une entrée de données (44) du circuit bistable (41) et configuré pour être réglé comme étant non conducteur par le signal d'activation.

5. Unité de commande (10) selon la revendication 4, dans laquelle le fusible (46) est destiné à interconnecter l'entrée de données (44) et une tension de fonctionnement du circuit bistable (41).

6. Unité de commande (10) selon la revendication 4 ou 5, comprenant en outre un élément à résistance (47) interconnectant une sortie de données (45) du circuit bistable (41) et une tension de fonctionnement du circuit bistable (41), où une résistance électrique de l'élément à résistance (47) est supérieure à la résistance du fusible conducteur (46).

7. Unité de commande (10) selon la revendication 4 ou 5, comprenant en outre un anti-fusible destiné à interconnecter l'entrée de données (44) et une deuxième tension de fonctionnement du circuit bistable (41) et configuré pour être réglé comme étant conducteur par le signal d'activation.

8. Unité de commande (10) selon l'une quelconque des revendications 4 à 7, dans laquelle le fusible est configuré pour être réglé comme étant non conducteur par l'application de la tension de fonctionnement du circuit bistable (41) pendant une durée supérieure à un intervalle de temps prédéterminé.

9. Unité de commande (10) selon l'une quelconque des revendications 4 à 8, comprenant une SRAM (41) en tant que circuit bistable.

10. Unité de commande selon l'une quelconque des revendications 1 à 3, dans laquelle l'élément de mémoire non volatile (14) comprend un transistor à grille flottante.

11. Unité de commande (10) selon l'une quelconque des revendications précédentes, dans laquelle le circuit de vérification (15) comprend au moins un amplificateur différentiel (58) configuré pour amplifier la sortie de données de l'élément de mémoire non volatile (14).

12. Unité de commande (10) selon la revendication 11, dans laquelle le circuit d'activation (16) comprend au moins un élément de commutation (62) configuré pour interconnecter l'entrée d'alimentation (11) et le module de commande (13) en réponse à une sortie spécifique de l'amplificateur différentiel (58).

13. Système de batterie (100) comprenant un circuit de commande (10) selon l'une quelconque des revendications précédentes faisant partie d'au moins l'un d'un système de gestion de batterie, d'une unité de surveillance de batterie et d'un circuit de supervision de cellule (10).

14. Procédé de démarrage d'une unité de commande (10) pour un système de batterie (100), l'unité de commande (10) comprenant une entrée d'alimentation (11) pour une tension de fonctionnement fournie par au moins une cellule de batterie (80) ; un module de commande (13) configuré pour réaliser au moins une fonction de commande par rapport à l'au moins une cellule de batterie (80) tout en étant alimenté par la tension de fonctionnement, et comprenant un moyen pour détecter une tension de l'au moins une cellule de batterie (80) ; et un module de démarrage (12) connecté entre l'entrée d'alimentation (11) et le module de commande (13), le procédé comprenant les étapes consistant à :
(a) régler un élément de mémoire non volatile (14) du module de démarrage (12) à une première valeur prédéterminée ;
(b) fournir une tension de fonctionnement à l'entrée d'alimentation (11) de l'unité de commande (10) par l'au moins une cellule de batterie (80) ;
(c) délivrer en sortie la première valeur à partir de l'élément de mémoire non volatile (14) ;
(d) activer l'élément de module de commande (14) de l'unité de commande (10) si la valeur de sortie est égale à la première valeur prédéterminée ; et
(e) régler irréversiblement la valeur de l'élément de mémoire non volatile (14) à une deuxième valeur différente de la première valeur en réponse à un signal d'activation qui est lié à un démarrage initial de l'unité de commande (13) .

15. Procédé selon la revendication 14, dans lequel le signal d'activation est la tension de fonctionnement de l'unité de commande (10) qui est fournie à l'élément de mémoire non volatile (14) pour une durée supérieure à un intervalle de temps prédéterminé pendant l'étape (b) ; dans lequel le signal d'activation est généré si la valeur de sortie est égale à la première valeur prédéterminée ; ou dans lequel le signal d'activation est appliqué de l'extérieur à l'unité de commande (10) après l'application de la tension de fonctionnement.
